Europäisches Patentamt

European Patent Office

Office européen des brevets

(19)

(11) Veröffentlichungsnummer : **0 205 766**
**B1**

(12) **EUROPÄISCHE PATENTSCHRIFT**

(45) Veröffentlichungstag der Patentschrift :
07.09.88

(51) Int. Cl.⁴ : **B 65 D 85/10**

(21) Anmeldenummer : **86103727.3**

(22) Anmeldetag : **19.03.86**

(54) **Klappdeckelschachtel für Zigaretten od. dgl.**

(30) Priorität : **02.05.85 DE 3515775**

(43) Veröffentlichungstag der Anmeldung :
**30.12.86 Patentblatt 86/52**

(45) Bekanntmachung des Hinweises auf die Patenterteilung : **07.09.88 Patentblatt 88/36**

(84) Benannte Vertragsstaaten :
**DE FR GB IT NL SE**

(56) Entgegenhaltungen :
**DE-A- 2 940 797**
**DE-A- 3 116 924**

(73) Patentinhaber : **Focke & Co. (GmbH & Co.)**
**Siemensstrasse 10**
**D-2810 Verden (DE)**

(72) Erfinder : **Focke, Heinz**
**Moorstrasse 64**
**D-2810 Verden (DE)**
Erfinder : **Mutschall, Hugo**
**Deelsener Strasse 6**
**D-2816 Kirchlintein (DE)**

(74) Vertreter : **Bolte, Erich, Dipl.-Ing.**
**Hollerallee 73**
**D-2800 Bremen (DE)**

## Beschreibung

Die Erfindung betrifft eine Klappschachtel aus faltbarem Material, wie Karton od. dgl., mit im wesentlichen quaderförmiger Gestalt, insbesondere zur Aufnahme einer in einen Innenzuschnitt eingehüllten Zigaretten-Gruppe (Stanniolblock) mit einem Schachtelteil und an einer Rückwand desselben angelenktem Klappdeckel, der in Schließstellung einen mit dem Schachtelteil verbundenen Kragen umfaßt, wobei Seitenwände bzw. Deckelseitenwände aus übereinander liegenden Seitenlappen bzw. Deckelseitenlappen gebildet sind.

Der vorliegende Verpackungstyp wird auch als Hinge-Lid-Packung bezeichnet. Aufgrund des verhältnismäßig festen Verpackungsmaterials (dünner Karton) sind derartige Verpackungen verhältnismäßig formstabil. Längs- und Querkanten der Klappschachtel zur Begrenzung von Wänden sind bisher ausschließlich scharfkantig ausgebildet. Dies ist auch ein Grund für den beträchtlichen Materialaufwand für diesen in der Praxis beliebten Verpackungstyp.

Durch die DE-A-2 940 797 ist eine Schachtel für Zigarettenbekannt, die allseits mit stark abgerundeten Kanten versehen ist, also mit aufrechten wie auch mit quergerichteten Rundkanten. Die Schachtel ist mit einem über ein Scharnier angelenkten Klappdeckel versehen. Die Zigaretten finden Aufnahme in einem separaten Einsatz innerhalb der Schachtel, wobei der Einsatz kleinere Abmessungen hat als die Schachtel selbst. Diese besteht aus einlagigen Wandungen, beispielsweise aus Kunststoff.

Eine derartige Packung ist für die Massenfertigung und als Einmalpackung zu aufwendig. Darüber hinaus weicht sie zu sehr von einer herkömmlichen Schachtel (Hinge-Lid-Packung) ab.

Der Erfindung liegt die Aufgabe zugrunde, eine Klappschachtel der eingangs genannten Ausführung unter Aufrechterhaltung des konstruktiven Aufbaus und der Funktionalität so auszubilden, daß der Materialaufwand gegenüber herkömmlichen Klappschachteln reduziert ist.

Zur Lösung dieser Aufgabe ist die erfindungsgemäße Klappschachtel durch folgende Merkmale gekennzeichnet :

a) (aufrechte) Längskanten des Schachtelteils, des Klappdeckels und des Kragens sind abgerundet, wobei der Radius der Rundungen dem einer Zigarette (etwa) entspricht.

b) die Seitenlappen bzw. Deckelseitenlappen sind in ihrer Breite so bemessen, daß sie sich wechselseitig nur im Bereich außerhalb der Rundungen der Längskanten überdecken.

Die abgerundeten Längskanten bewirken eine Materialeinsparung zunächst dadurch, daß sich die Klappschachtel eng und formschlüssig an die äußere Kontur des Packungsinhalts, nämlich der Zigaretten-Gruppe, anschmiegt. Bei herkömmlichen « kantigen » Klappschachteln fehlt es an einer optimalen Materialbenutzung im Bereich der Längskanten, da hier gegenüber den an den Ecken liegenden Zigaretten ein Hohlraum verbleibt. Bei der Erfindung wird der Stanniolblock praktisch exakt formschlüssig und damit materialsparend umgeben.

Eine weitere Materialeinsparung ergibt sich bei der erfindungsgemäßen Klappschachtel durch die Ausbildung der inneren und äußeren Seitenlappen sowie Deckelseitenlappen mit geringerer Breite als bei herkömmlichen Klappschachteln. Diese schmaleren Seitenlappen und Deckelseitenlappen liegen zur Bildung von Seitenwänden und Deckelseitenwänden nur in dem Bereich außerhalb der Rundungen der Längskanten aneinander. Die betreffenden Seitenlappen und Deckelseitenlappen beanspruchen dadurch weniger Material.

Vorteilhaft ist aber auch die Handhabung der Packung, da sich diese aufgrund der abgerundeten Längskanten angenehmer erfassen läßt.

Nach einem weiteren Vorschlag ist der Kragen im Bereich der Rundung mit einer durch Stanzung gebildeten Verriegelungslasche ausgestattet, die geringfügig über die Seitenkonturen des Kragens hinwegragt und in Schließstellung des Klappdeckels hinter eine Kante des inneren Deckelseitenlappens faßt. Zum Öffnen der Klappschachtel durch Zurückschwenken des Klappdeckels wird die Verriegelungslasche verformt, so daß der Deckel in üblicher Weise betätigt werden kann.

Ein weiterer erfindungsgemäßer Vorschlag für die Verriegelung des Klappdeckels in Schließstellung besteht darin, daß im Bereich einer Kragenvorderwand ein nach unten gerichteter, umgefalteter Verankerungslappen gebildet ist, der in schließstellung des Klappdeckels mit einer an der Innenseite desselben im Bereich der Vorderwand gebildeten Gegenkante zusammenwirkt, insbesondere mit der oberen Kante eines Verstärkungsstreifens an der Innenseite des Klappdeckels.

Weitere Merkmale der Erfindung betreffen die Ausgestaltung der Klappschachtel und deren Herstellung.

Ausführungsbeispiele einer Klappschachtel werden nachfolgend anhand der Zeichnungen erläutert. Es zeigt :

Fig. 1 eine Klappschachtel mit abgerundeten Längskanten in perspektivischer Darstellung,

Fig. 2 einen Zuschnitt für eine Klappschachtel gemäß Fig. 1 in einer Zwischenfaltstellung, ebenfalls perspektivisch,

Fig. 3 einen Querschnitt zu dem Zuschnitt gemäß Fig. 2,

Fig. 4 die Anordnung von Zuschnitten für eine Klappschachtel gemäß Fig. 1 innerhalb eines Nutzens des Verpackungsmaterials,

Fig. 5 den oberen Teil der Klappschachtel in Seitenansicht, in geschlossener Stellung, bei vergrößertem Maßstab,

Fig. 6 eine Darstellung entsprechend Fig. 5 während einer Öffnungsphase des Klappdeckels,

Fig. 7 einen Horizontalschnitt durch einen Bereich des Klappdeckels in Schließstellung,

Fig. 8 eine andere Ausführungsform eines Klappdeckels in einer Darstellung gemäß Fig. 1,

Fig. 9 einen Kragen als Detail der Klappschachtel gemäß Fig. 8, ebenfalls in perspektivischer Darstellung.

Die in den Zeichnungen dargestellten Klappschachteln aus dünner Pappe bzw. dünnem Karton dienen zur Aufnahme von Zigaretten, nämlich einer Zigaretten-Gruppe, die in einen Innenzuschnitt, insbesondere in einen Stanniolzuschnitt, eingehüllt ist (nicht dargestellt). Der annähernd quaderförmige Stanniolblock findet passend, formschlüssig Aufnahme in der Klappschachtel.

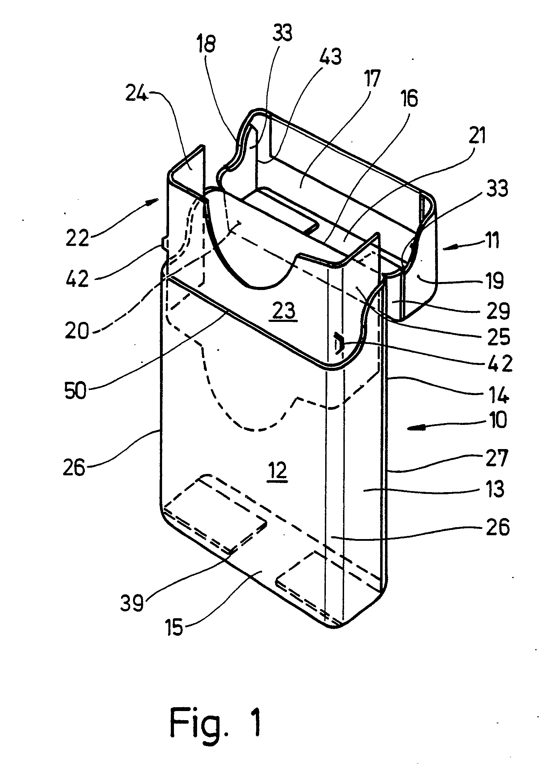

Gemäß Fig. 1 besteht die Klappschachtel aus einem Schachtelteil 10 und einem Klappdeckel 11. Ersterer wird durch eine Vorderwand 12, Seitenwände 13, Rückwand 14 sowie Bodenwand 15 gebildet. Der Klappdeckel 11 ist im Bereich einer Scharnierlinie 16 mit der Rückwand 14 verbunden.

Der Klappdeckel 11 besteht analog zum Schachtelteil 10 aus einer Deckelvorderwand 17, Deckelseitenwänden 18 und 19, einer Deckelrückwand 20 (in Verbindung mit der Rückwand 14 des Schachtelteils 10) und einer Deckeloberwand 21.

Im Sinne konventioneller Gestaltung einer Klappschachtel ist in den Schachtelteil 10 ein Kragen 22 eingesetzt, der aus Kragenvorderwand 23 und Kragenseitenwänden 24 und 25 besteht. Der untere Teil des Kragens 22 ist mit der Vorderwand 12 und den Seitenwänden 13 verbunden. Ein oberer Bereich ragt aus dem Schachtelteil 10 heraus und wird in Schließstellung durch den Klappdeckel 11 umschlossen.

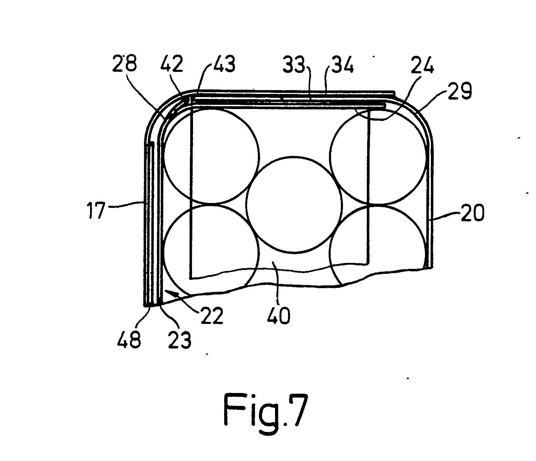

Aufrechte Längskanten 26, 27 des Schachtelteils 10 sowie in Verlängerung derselben verlaufende Deckellängskanten 28 und 29 und vordere Kragenlängskanten 30 sind stark abgerundet, und zwar derart, daß die Rundung der vorgenannten Längskanten derjenigen der zu verpackenden Zigaretten entspricht (Fig. 7). Die im Querschnitt viertelkreisförmig ausgebildeten Längskanten 26..30 haben demnach (etwa) denselben Radius wie die Zigaretten, so daß sich diese mit dem sie umgebenden Stanniolzuschnitt eng an die Konturen der Klappschachtel im Bereich dieser Längskanten 26..30 anschmiegen.

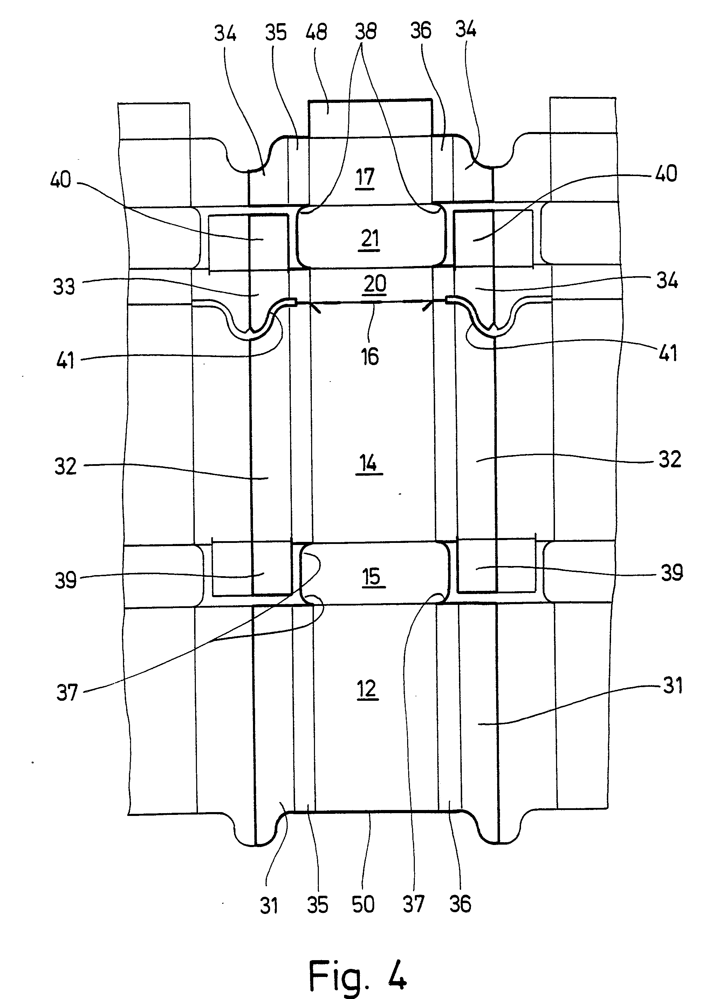

Eine Klappschachtel mit in diesem Sinne abgerundeten, aufrechten Längskanten 26..29 kann beispielsweise aus einem Zuschnitt gemäß Fig. 4 gefertigt werden. Aufgrund des Seitenschluß-Konstruktionsprinzips der Klappschachtel werden die Seitenwände 13 durch einander Überdeckende Seitenlappen 31 und 32 gebildet. Für die Deckelseitenwände 18 und 19 sind entsprechend ausgebildete Deckelseitenlappen 33 im Bereich der Deckelrückwand 20 sowie Deckelseitenlappen 34 im Bereich der Deckelvorderwand 17 vorgesehen. Zwischen den Seitenlappen 31..34 einerseits und den benachbarten Wänden der Klappschachtel bzw, des Zuschnitts (Fig. 4) ist ein Materialstreifen 35 bzw, 36 vorgesehen, der zur Bildung der bogenförmigen, abgerundeten Längskanten 26..30 dient. Die Seitenlappen 31, 32 und Deckelseitenlappen 33, 34 erhalten dadurch eine geringere Breite als die Gesamtbreite der Klappschachtel selbst, nämlich vermindert um die Abmessung der Rundungen bzw. Materialstreifen 35, 36. Die einander zugeordneten Seitenlappen 31 und 32 bzw. Deckelseitenlappen 33 und 34 überdecken einander vollflächig.

Die Bodenwand 15 und die Deckeloberwand 21 sind mit abgerundeten Ecken 37 bzw. 38 versehen, die passend, formschlüssig unten und oben an die abgerundeten Längskanten 26, 27 bzw. Deckellängskanten 28, 29 stoßen.

An den innen liegenden Seitenlappen 32 sowie den ebenfalls innen liegenden Deckelseitenlappen 33 sind, wie grundsätzlich bekannt, Bodeneckklappen 39 bzw. Deckelecklappen 40 angebracht. Diese liegen bei der fertig gefalteten Klappschachtel an der Innenseite der Bodenwand 15 bzw. der Deckeloberwand 21 an. Bei der vorliegenden Gestaltung der Klappschachtel sind die Bodenecklappen 39 und die Deckelecklappen 40 mit geringerer Breite ausgebildet als die Gesamtbreite der Klappschachtel, nämlich etwa so breit wie die anschließenden Seitenlappen 32 und Deckelseitenlappen 33.

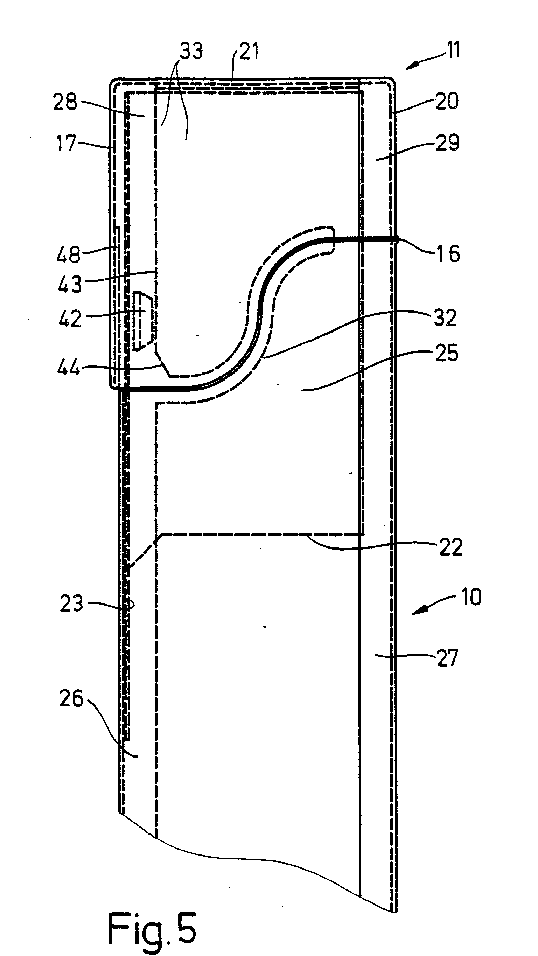

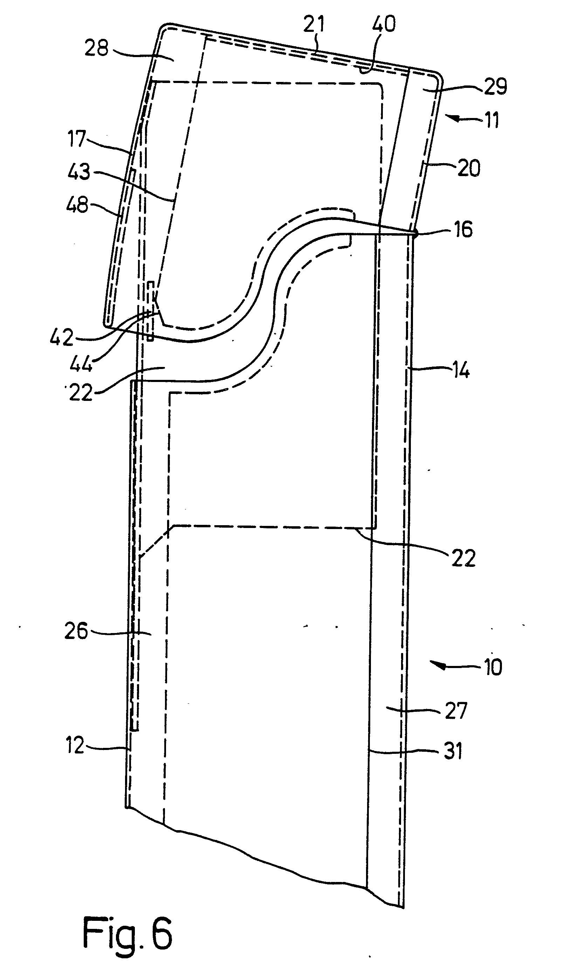

Des weiteren ist im vorliegenden Fall durch eine entsprechende (geschwungene, S-förmige) Stanzung 41 zwischen den innen liegenden Seitenlappen 32 und Deckelseitenlappen 33 bewirkt, daß diese gegenüber den zugeordneten außen liegenden Seitenlappen 31 bzw. Deckelseitenlappen 34 nach innen zurückspringen (Fig. 5 und 6). Durch diesen Versatz zwischen den inneren und äußeren Seitenlappen 31..34 werden etwaige ungenaue Relativstellungen zwischen den aneinanderliegenden Seitenlappen ausgeglichen.

Die Klappschachtel ist mit einer Verriegelung für die Sicherung bzw. Stabilisierung der Schließstellung des Klappdekkels 11 versehen. Zu diesem Zweck ist der Kragen 22 im seitlichen Bereich, nämlich im Bereich der Kragenlängskanten 30, mit einer Verriegelungslasche 42 versehen, die in Wirkstellung geringfügig über die Konturen des Kragens 22 hinwegragt. Die Verriegelungslasche 42 wird durch annähernd U-förmige Stanzung im Bereich des Übergangs zwischen Kragenseitenwand 24, 25 und Kragenvorderwand 23 gebildet. Die so entstehende und vorspringende Verriegelungslasche 42 befindet sich in einer Stellung, in der bei geschlossenem Klappdeckel 11 eine Vorderkante 43 des inneren Deckelseitenlappens 33 hinter die Verriegelungslasche 42 faßt bzw. von dieser beaufschlagt wird in Richtung auf die Schließstellung. Zum Öffnen der Klappschachtel wird der Klappdeckel 11 in üblicher Weise verschwenkt, wobei die Vorderkante 43 des Deckelseitenlappens 33 die durch die Verriegelungslasche 42 ausgeübte Rückhaltekraft überwindet. Um diesen Öffnungsvorgang zu erleichtern, ist gemäß Fig. 5 und 6 im Bereich der unteren, vorderen Ecke des inneren Deckelseitenlappens 33 eine Abschrägung 44 gebildet.

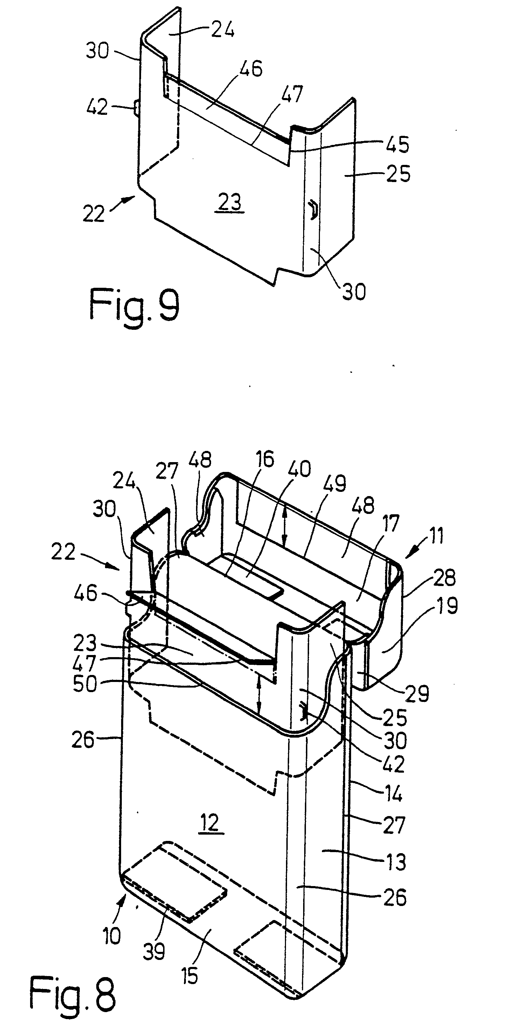

Eine zusätzliche bzw. alternative Verriegelung des Klappdeckels 11 in der Schließstellung ist in Fig. 8 und 9 gezeigt. Die Kragenvorderwand 23 ist durch benachbart zu den Kragenlängskanten 30 mit Abstand von diesen verlaufende Trennschnitte 45 mit einem Verankerungslappen 46 versehen. Dieser erstreckt sich über einen Teilbereich der Kragenvorderwand 23. Durch Umfalten wird der Verankerungslappen 46 in eine Position gebracht, in der er im wesentlichen nach unten gerichtet ist. Eine untere Querkante 47 dient der Verriegelung des Klappdeckels 11.

Dieser ist im Bereich der Deckelvorderwand 17 innenseitig mit einer Verstärkungslasche 48 versehen, die gegen die Innenseite der Deckelvorderwand 17 umgefaltet und hier durch Klebung fixiert ist. Eine ebenfalls quergerichtete Oberkante 49 der Verstärkungslasche 48 erhält eine Lage, in der sie bei geschlossener Klappschachtel an der nach unten weisenden Querkante 47 des Verankerungslappens 46 anliegt. Dieser ist nicht durch Klebung oder auf andere Weise an der Kragenvorderwand 23 fixiert, sondern frei schwenkbar. Dadurch kann der Verankerungslappen 46 beim Öffnen und Schließen des Klappdeckels 11 den Bewegungen der Deckelvorderwand 17 folgen. Die Abmessungen sind dabei so gewählt, daß die Breite der Verstärkungslasche 48 dem Abstand zwischen der nach unten weisenden Querkante 47 des Verankerungslappens 46 und einer oberen Schachtelkante 50 der Vorderwand 12 entspricht. Verankerungslappen 46 und Verstärkungslasche 48 haben dadurch in Schließstellung einen formschlüssigen Eingriff.

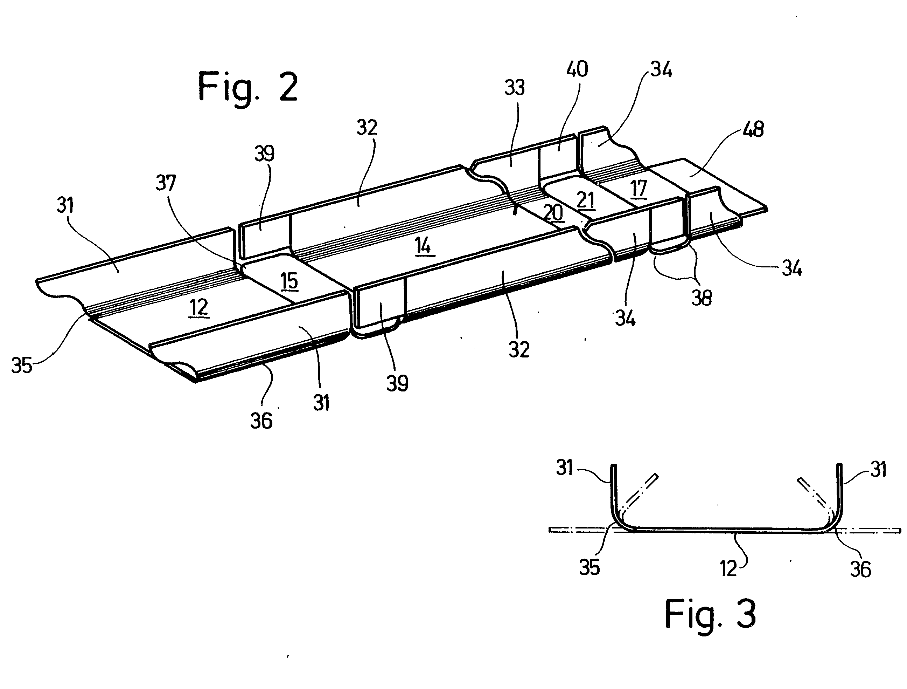

Bei der Herstellung einer Klappschachtel in der vorliegenden Ausführung mit abgerundeten Längskanten 26..29 wird gemäß Fig. 2 und 3 in der Weise vorgegangen, daß der langgestreckte, einstückige Zuschnitt zunächst in bezug auf die Abrundungen der Längskanten 26..29 vorgeformt wird. Der Zuschnitt erhält dadurch im Querschnitt eine im wesentlichen U-förmige Gestalt. Die aufgerichteten Seitenlappen werden dabei so weit nach innen verformt, daß sie infolge der Rückstellkräfte eine aufrechte Position einnehmen. Nach der Formung der abgerundeten Längskanten 26..29 wird der Zuschnitt der weiteren Faltung sowie Füllung zugeführt.

## Patentansprüche

1. Klappschachtel aus faltbarem Material, wie Karton od. dgl., mit im wesentlichen quaderförmiger Gestalt, insbesondere zur Aufnahme einer in einen Innenzuschnitt eingehüllten Zigaretten-Gruppe (Stanniolblock), mit einem Schachtelteil (10) und an einer Rückwand (14) desselben angelenktem Klappdeckel (11), der in Schließstellung einen mit dem Schachtelteil (10) verbundenen Kragen (22) umfaßt, wobei Seitenwände (13) bzw. Deckelseitenwände (18, 19) aus übereinander liegenden Seitenlappen (31, 32) bzw. Deckelseitenlappen (31, 34) gebildet sind, gekennzeichnet durch folgende Merkmale :

a) (aufrechte) Längskanten (26, 27 ; 28, 29 ; 30) des Schachtelteils (10), des Klappdeckels (11) und des Kragens (22) sind abgerundet, wobei der Radius der Rundungen dem einer Zigarette (etwa) entspricht,

b) die Seitenlappen (31, 32) bzw. Deckelseitenlappen (33, 34) sind in ihrer Breite so bemessen, daß sie sich wechselseitig nur im Bereich außerhalb der Rundungen der Längskanten (26...29) überdecken.

2. Klappschachtel nach Anspruch 1, dadurch gekennzeichnet, daß eine Bodenwand (15) und eine Deckeloberwand (21) mit abgerundeten Ecken (37, 38) nach Maßgabe der Rundungen der Längskanten (26..29) und ohne Verbindung mit diesen formschlüssig an die zugeordneten Wände stumpf anstoßen.

3. Klappschachtel nach Anspruch 1 oder 2, dadurch gekennzeichnet, daß Seitenwände (13) bzw. Deckelseitenwände (18, 19) aus übereinanderliegenden Seitenlappen (31, 32) bzw. Deckelseitenlappen (33, 34) gebildet sind, die in ihrer Breite so bemessen sind, daß sie sich wechselseitig nur im Bereich außerhalb der Rundungen der Längskanten (26..29) überdecken.

4. Klappschachtel nach Anspruch 1 sowie einem oder mehreren der weiteren Ansprüche, dadurch gekennzeichnet, daß an die (innen liegenden) Seitenlappen (32) anschließende Bodenecklappen (39) sowie an die innen liegenden Deckelseitenlappen (33) anschließende Deckelecklappen (40) mit geringerer Breite ausgebildet sind als die Breite der Bodenwand (15) bzw. Deckeloberwand (21), nämlich entsprechend der Breite der Seitenlappen (31) bzw. Deckelseitenlappen (33) zwischen den Rundungen der Längskanten (26..29).

5. Klappschachtel nach Anspruch 1 sowie einem oder mehreren der weiteren Ansprüche, dadurch gekennzeichnet, daß innen liegende Seitenlappen (31) bzw. Dekkelseitenlappen (33) durch insbesondere S-förmig geschwungene (Doppel-) Stanzungen (41) einen Abstand voneinander aufweisen, derart, daß obere bzw. untere Ränder der innen liegenden Seitenlappen (31) bzw. Deckelseitenlappen (33) gegenüber den Rändern der außen liegenden Seitenlappen (32) bzw. Deckelseitenlappen (34) zurückgesetzt sind.

6. Klappschachtel nach Anspruch 1 sowie einem oder mehreren der weiteren Ansprüche, dadurch gekennzeichnet, daß der Kragen (22) im seitlichen, vorderen Bereich eine durch U-förmige bzw. trapezförmige Stanzung gebildete Verriegelungslasche (42) aufweist, die in Schließstellung an einer der Deckelvorderwand (17) des Klappdeckels (11) zugekehrten Kante, insbesondere an einer aufrechten Vorderkante (43) des innen liegenden Deckelseitenlappens (33) anliegt.

7. Klappschachtel nach Anspruch 6, dadurch gekennzeichnet, daß die Verriegelungslasche (42) im Bereich der abgerundeten Kragenlängskante (30) angeordnet ist, benachbart zum oberen Bereich des Schachtelteils (10).

8. Klappschachtel nach Anspruch 6 oder 7, dadurch gekennzeichnet, daß die Verriegelungslasche (42) in Ausgangsstellung in Richtung zur Rückwand (14) bzw. Deckelrückwand (20) gerichtet ist.

9. Klappschachtel nach Anspruch 6 sowie einem oder mehreren der weiteren Ansprüche, dadurch gekennzeichnet, daß eine untere, vordere Ecke des inneren Deckelseitenlappens (33) mit einer Abschrägung (44) versehen ist.

10. Klappschachtel nach Anspruch 1 sowie einem oder mehreren der weiteren Ansprüche, dadurch gekennzeichnet, daß der Klappdeckel (11) in Schließstellung (zusätzlich) im Bereich der Kragenvorderwand (23) durch einen an der Kragenvorderwand (23) anliegenden Verankerungslappen (46) fixiert ist, der in Schließstellung mit einer Raste an der Innenseite des Klappdeckels (11) zusammenwirkt, insbesondere mit einer Oberkante (49), einer an der Innenseite der Deckelvorderwand (17) anliegenden Verstärkungslasche (48).

11. Klappschachtel nach Anspruch 10, dadurch gekennzeichnet, daß der Verankerungslappen (46) als Teil der entsprechend dimensionierten Kragenvorderwand (23) gebildet ist, nämlich durch Umfalten eines Bereichs derselben nach unten gegen den unteren Teil der Kragenvordervand (23).

## Claims

1. Hinge-lid pack consisting of foldable material, such as cardboard or the like, of essentially cuboid shape, especially for receiving a cigarette group wrapped in an inner blank (tin-foil block), with a pack part (10) and with a hinge lid (11) which is articulated on a rear wall (14) of the latter and which, in the closed position, surrounds a collar (22) connected to the pack part (10), side walls (13) or lid side walls (18, 19) being formed form superjacent side tabs (31, 32) or lid side tabs (31, 34), characterised by the following features :
   a) (vertical) longitudinal edges (26, 27 ; 28, 29 ; 30) of the pack part (10), of the hinge lid (11) and of the collar (22) are rounded, the radius of the rounded portions corresponding (approximately) to that of a cigarette.
   b) the width of the side tabs (31, 32) or lid side tabs (33, 34) is calculated in such a way that they overlap one another only in the region located outside the rounded portions of the longitudinal edges (26-29).

2. Hinge-lid pack according to Claim 1, characterised in that a bottom wall (15) and a lid top wall (21) with rounded corners (37, 38) fit flush against the associated walls positively in accordance with the dimensions of the rounded portions of the longitudinal edges (26, 29) and without being connected to these.

3. Hinge-lid pack according to Claim 1 or 2, characterised in that side walls (13) and lid side walls (18, 19) are formed respectively from side tabs (31, 32) and lid side tabs (33, 34) which lie on top of one another and the width of which is dimensioned such that they overlap one another only in the region outside the rounded portions of the longitudinal edges (26 to 29).

4. Hinge-lid pack according to Claim 1 and one or more of the further claims, characterised in that bottom corner tabs (39), adjoining the (inner) side tabs (32), and lid corner tabs (40), adjoining the inner lid side tabs (33), are made with less width than the width of the bottom wall (15) and lid top wall (21) respectively, in particular according to the width of the side tabs (31) and lid side tabs (33) between the rounded portions of the longitudinal edges (26 to 29).

5. Hinge-lid pack according to Claim 1 and one or more of the further claims, characterised in that inner side tabs (31) and lid side tabs (33) are at such a distance from one another, as a result of (double) stampings (41) undulating especially in the form of an S, that top and bottom edges of the inner side tabs (31) and of the lid side tabs (33) are respectively set back relative to the edges of the outer side tabs (32) and lid side tabs (34).

6. Hinge-lid pack according to Claim 1 and one or more of the further claims, characterised in that the collar (22) has, in the lateral front region, a locking tongue (42) which is formed by a U-shaped or trapezoidal stamping and which, in the closed position, rests against an edge facing the lid front wall (17) of the hinge lid (11), in particular against a vertical front edge (43) of the inner lid side tab (33).

7. Hinge-lid pack according to Claim 6, characterised in that the locking tongue (42) is arranged in the region of the rounded collar longitudinal edge (30), adjacent to the upper region of the pack part (10).

8. Hinge-lid pack according to Claim 6 or 7, characterised in that, in the initial position, the locking tongue (42) is directed in the direction of the rear wall (14) or lid rear wall (20).

9. Hinge-lid pack according to Claim 6 and one or more of the further claims, characterised in that a bottom front corner of the inner lid side tab (33) is provided with a bevel (44).

10. Hinge-lid pack according to Claim 1 and one or more of the further claims, characterised in that, in the closed position, the hinge lid (11) is fastened (additionally) in the region of the collar front wall (23) by an anchoring tab (46) which rests against the collar front wall (23) and which, in the closed position, interacts with a catch on the inside of the hinge lid (11), in particular with a top edge (49) of a reinforcing strip (48) resting against the inside of the lid front wall (17).

11. Hinge-lid pack according to Claim 10, characterised in that the anchoring tab (46) is formed as part of the collar front wall (23) of appropriate dimensions, in particular by folding round a region of the latter downwards against the lower part of the collar front wall (23).

## Revendications

1. Boîte à rabat en matière pliable, telle que carton ou l'analogue, de forme sensiblement parallélépipèdique, en particulier pour loger un groupe de cigarettes enveloppé dans un morceau découpé (flan intérieur) (bloc d'étain), comportant une partie boîte (10) et un couvercle rabattable (11) articulé sur une paroi arrière (14) de celle-ci et qui, en position de fermeture, entoure un collet (22) relié à la partie boîte (10), des parois latérales (13) et parois latérales de couvercle (18, 19) étant formées à partir de languettes latérales (31, 32) et languettes latérales de couvercle (31, 34) disposées l'une sur l'autre, caractérisée par les caractéristiques suivantes :

a) des arêtes longitudinales (verticales) (26, 27 ; 28, 29 ; 30) de la partie boîte (10), du couvercle rabattable (11) et du collet (22) sont arrondies le rayon des arrondis correspondant (à peu près) à celui des cigarettes,

b) les languettes latérales (31, 32) et languettes latérales de couvercle (33, 34) sont de largeurs telles qu'elles se recouvrent alternativement seulement dans la zone extérieure aux arrondis des arêtes longitudinales (26.29).

2. Boîte à rabat selon la revendication 1, caractérisée par le fait qu'une paroi de fond (15) et une paroi supérieure de couvercle (21), à coins arrondis (37, 38) à la mesure des arrondis des arêtes longitudinales (28, ... 29) et sans liaison avec celles-ci, sont accolées bout à bout aux parois associées.

3. Boîte à rabat selon la revendication 1 ou 2, caractérisée par le fait que des parois latérales (13 et parois latérales de couvercle (18, 19) sont formées à partir de languettes latérales (31, 32) et languettes latérales de couvercle (33, 34) superposées, qui sont de largeur telle qu'elles ne se recouvrent alternativement que dans la zone extérieure aux arrondis des arêtes longitudinales (26, 29).

4. Boîte à rabat selon la revendication 1 et l'une des autres revendications, caractérisée par le fait que des languettes de coins de fond (39) raccordées aux languettes latérales (situées à l'intérieur) (32) ainsi que des languettes de coins de couvercle (40) raccordées aux languettes latérales de couvercle (33) situées à l'intérieur, sont formées avec une largeur plus faible que celle de la paroi de fond (14) et la paroi supérieure de couvercle (21), à savoir correspondant à la largeur des languettes latérales (31) et languettes latérales de couvercle (33) entre les arrondis des arêtes longitudinales (26 ... 29).

5. Boîte à rabat selon la revendication 1 et l'une des revendications précédentes, caractérisée par le fait que des languettes latérales (31) situées vers l'intérieur et des languettes latérales de couvercle (33) sont séparées les unes des autres par des découpures (doubles) (41) arquées, en particulier en S, de telle sorte que des bords supérieurs et inférieurs des languettes latérales (31) et languettes latérales de couvercle (33) situées à l'intérieur sont en retrait par rapport aux bords des languettes latérales (32) et languettes latérales de couvercle (34) situées à l'extérieur.

6. Boîte à rabat selon la revendication 1 et l'une des revendications précédentes, caractérisée par le fait que le collet (22) possède, dans la zone avant, latérales, une patte de verrouillage (42), formée par découpage en U ou trapézoïdal, et qui, en position de fermeture, s'applique sur une arête adjacente de la paroi avant (17) du couvercle rabattable (11), en particulier sur une arête avant (43) verticale de la languette latérale de couvercle (33) située vers l'intérieur.

7. Boîte à rabat selon la revendication 6, caractérisée par le fait que la patte de verrouillage (42) est située au voisinage de l'arête longitudinale de collet (30) arrondie, voisine de la zone supérieure de la partie boîte (10).

8. Boîte à rabat selon la revendication 6 ou 7, caractérisée par le fait que la patte de verrouillage (42), en position d'ouverture, est dirigée en direction de la, paroi arrière (14) et paroi arrière de couvercle (20).

9. Boîte à rabat selon la revendication 6 et l'une des revendications précédentes, caractérisée par le fait qu'un coin avant, inférieur de la languette latérale de couvercle (33) intérieure, est prévu avec un biseau (44).

10. Boîte à rabat selon la revendication 1 et l'une des revendications précédentes, caractérisée par le fait que le couvercle rabattable (11), en position de fermeture, est fixé (additionnellement), dans la zone de la paroi avant de collet (23), par une patte d'ancrage (46) se trouvant sur la paroi avant de collet (23), et qui, en position de fermeture, coopère avec un cran d'arrêt sur la face intérieure du couvercle rabattable (11), en particulier avec une arête supérieure (49), une patte de renforcement (48) située sur la face intérieure de la paroi avant de couvercle (17).

11. Boîte à rabat selon la revendication 10, caractérisée par le fait que la patte d'ancrage (46) est formée en tant que partie de la paroi avant de collet (23) de dimensions correspondantes, à savoir par pliage d'une zone de celle-ci vers le bas contre la partie inférieure de la paroi avant de collet (23).

Fig. 1

Fig. 2

Fig. 3

0 205 766

Fig. 4

Fig. 5

Fig.6

Fig.7

0 205 766

Fig.9

Fig.8

7